# EUROPEAN PATENT SPECIFICATION

(11) **EP 4 091 886 B1**
(45) Date of publication and mention of the grant of the patent: **11.10.2023**
(21) Application number: 22174423.8
(22) Date of filing: 19.05.2022
(51) Int. Cl.: B60R 19/44

(54) **A VEHICLE SCRATCH PROTECTION DEVICE**
KRATZSCHUTZVORRICHTUNG FÜR FAHRZEUGE
PROCÉDÉ DE PROTECTION DE RAYURES DE VÉHICULE

(30) Priority: 20.05.2021 GB 202107215
(43) Date of publication of application: 23.11.2022
(73) Proprietor: KMC75 Limited, London Greater London NW11 7BY (GB)
(72) Inventor: COLLINS, Keren, London, NW11 7BY (GB)
(74) Representative: Walker, Neville Daniel Alan

(56) References cited:
- DE-A1- 10 159 300
- GB-A- 487 419
- US-A- 4 264 093
- US-B1- 9 713 952

## Description

### Field of the Invention

The present invention relates to a vehicle scratch protection device for protecting the bumper of a vehicle, including the body and paintwork of the bumper, in particular during parking for example for use when reversing of the car or when parked.

### Background

A vehicle can be more liable to become scratched by another vehicle or object during parking manoeuvres.

A vehicle bumper provides a protective element to a vehicle that may be replaced or repaired if damaged. However, bumper repair or replacement can be costly, but it is undesirable to leave scratches on the bumper.

An alternative protection method may be to have a vehicle wrapped in a protective film such as Vinyl (RTM), however this process can affect exterior appearance of the vehicle, is expensive and is not environmentally friendly as the process is toxic, typically emitting toxic chemical dioxin and often the wrap cannot be recycled.

Other protection systems such as parking sensors also may only offer limited protection, for example they may not function correctly if the sensors are scratched or dirty.

The present invention provides a simple means of protecting the bumpers of any vehicle.

### Prior Art

US2020/0130609 (IBITOYE) discloses an apparatus for an automated bumper protection roll.

US2018/0281717 (CHURCHWELL) discloses a deployable dent shield assembly for a vehicle.

US2018/009303 (ROMERO REGALADO) discloses a protective cover system for a motor vehicle with first and second rollers each with a cover wound onto each roller and a control module for displacing the covers.

US4848823 (FLOHR) discloses a remotely controlled power- assisted vehicle cover attached to a take-up spool winding and unwinding mechanism. US4856842 (ROSS) discloses a self-storing retractable automobile cover.

DE19620790 (HUNECKER) discloses a cover for a motor vehicle against weather with a cover that can be rolled onto and off a rotatable shaft.

US9713952B1 (BRUGGEMAN) discloses a vehicle side protection device that prevents damage to the side of a vehicle. This document discloses a scratch protection device for a vehicle comprising a vehicle attachment means, at least one roller for deploying and retracting at least one length of anti-scratch material, the at least one roller is arranged on a frame and a motor drives rotation of the roller, and at least one substantially vertical linear actuator is provided for moving the at least one roller with respect to the frame.

US4264093 (LONG) discloses a front bumper for vehicles which can replace a conventional bumper.

GB487419 (KELLY) discloses a bumper with actuating means operable within the vehicle that may project simultaneously before or while parking. This document discloses a scratch protection device for a vehicle comprising a vehicle attachment means, at least one roller for deploying and retracting at least one length of anti-scratch material, the at least one roller is arranged on a frame and a motor drives rotation of the roller, and at least one substantially horizontal linear actuator is provided for extending and retracting a bumper.

DE10159300A1 (SCHROTTER) discloses a device with deployable bump protection strips along the longitudinal sides of a vehicle and at least one sensor for detecting approach of external objections.

### Summary of the Invention

According to the present invention there is provided a scratch protection device for a vehicle comprising: a vehicle attachment means, at least one roller for deploying and retracting at least one length of anti-scratch material, the at least one roller is arranged on a frame and a motor drives rotation of the roller, and at least one substantially vertical linear actuator is provided for moving the at least one roller with respect to the frame and at least one substantially horizontal linear actuator is provided for extending and retracting a bumper.

In this way the scratch protection device provides a means of selectively deploying a protective material over part of a vehicle, typically a vehicle bumper, to prevent damage to another vehicle, or from another vehicle contacting the vehicle, or damage caused by the vehicle coming to contact with an object. For example, when parking in a car park or in a parking space or garage it may be useful to protect the bumpers to avoid potential damage during parking manoeuvres and the scratch protection device may remain deployed during parking to prevent risk of damage from other passing vehicles, such as vehicles that are parking alongside.

It is appreciated that a scratch protection device may be provided on both a front and a rear bumper. For a vehicle with a device on the front bumper and a device on the rear bumper, the devices may be used individually or may operate in sequence or in unison.

Ideally the anti-scratch material is a low friction fabric. For example, the material may be a strong, durable, flexible material so that it can easily bend around the shape of a vehicle and so that the material is suitable for repeated use and does not become damaged upon impact. For example, the anti-scratch material may be silicone.

In some embodiments the anti-scratch material may be transparent or translucent so that the material does not detract from the appearance of the vehicle.

In yet a further embodiment the anti-scratch material may be customised with decoration such as a bespoke design. For example the anti-scratch material may be coloured, and/or may include a pattern, branding or artwork. Preferably the material is formed from environmentally friendly components and using environmentally friendly methods of manufacture.

According to the invention the scratch protection device is associated with the bumper area of a vehicle and the bumpers are displaced by the horizontal linear actuators in order to enable the anti-scratch material to be deployed from the scratch protection device. For example, the scratch protection device may be located behind a bumper, in the bonnet space and/or vehicle boot space so that the scratch prevention device is not visible until deployed.

The scratch protection device has a frame upon which components such as the at least one actuator, roller and a motor driven train are driven by the motor are mounted. Typically, the frame is attached to the vehicle by the vehicle attachment means. For example, the vehicle attachment means may comprise bolt holes in the frame so that the frame can be bolted to the vehicle and/or the attachment means may comprise brackets for mounting to part of the vehicle.

The frame may be adjustable to permit easy attachment to different vehicles.

The device includes one or more vertical linear actuator to move the roller with respect to the frame. In this way the at least one roller can be moved up and down with respect to the frame. In this way the roller may be stowed behind the bumper of a vehicle when not in use and then deployed upward from behind the bumper when in use. This enables the roller to project above the bumper so that the anti-scratch material is deployed over the bumper.

Ideally the vertical linear actuator may be pre-set to the dimensions of the vehicle so that the roller is automatically moved to a pre-selected position for correct deployment of the anti-scratch material. For example the at least one actuator may be cable of a full range of movement between a first position and a second extended position and a controller may be provided to stop deployment of the actuator when a preset distance of extension has been reached. In this way a device may be selectively programmed for different vehicles.

In some embodiments the roller may be positioned when deployed by the at least one substantially vertical linear actuator so that the material is spaced away from the vehicle so that the anti-scratch material is deployed from the roller without directly contact the vehicle during deployment or retraction. For example the substantially vertical actuator may deploy the roller upwards and away from the vehicle. Advantageously this ensures that the material easily deploys over the bumper and does bunch up on the bumper and also prevents the bumper from being scratched or worn by repeated movement of the material over the bumper, in particular as the bumper is likely to have accumulated particles of dirt whilst being driven which could rub against the bumper if the material drags over the bumper during deployment and retraction. This may also be particularly beneficial in windy conditions where the material may be blown against the vehicle.

The scratch protection device also has at least one second actuator for displacing the bumper, or part of the bumper, away from the vehicle and returning the bumper to its original configuration. In this way when the bumper is displaced an opening through which the roller can be deployed is created.

The at least one second actuator that is a substantially horizontal linear actuator is connected to the bumper of a vehicle, for extending and retracting the bumper, or part of the bumper, substantially horizontally with respect to the vehicle. In this way the bumper, or part of the bumper, can be displaced from a first position (connected to the vehicle) to a second position (spaced apart from the vehicle).

Preferably the at least one horizontal linear actuator that moves the bumper back and forth with respect to the vehicle may be pre-set to the dimensions of the vehicle so that the bumper, or at least part of the bumper, is automatically moved to a pre-selected position that enables space for the roller to be deployed. In this way the bumper is only displaced the distance required to deploy the roller.

The scratch protection device has both a substantially vertical linear actuator to move the roller and a substantially horizontal linear actuator to displace the bumper or part of the bumper.

There may be a plurality of pre-set positions of the vertical and/or horizontal actuators, to accommodate different vehicles, so that it is possible to program the actuators to deploy to pre-set positions. In this way the scratch protection device may be readily fitted to different vehicles.

The actuators may be connecter to a programable controller which transmits signals to the actuators to start and cease movement.

The roller is displaceable on the frame by means of at least one substantially vertically moving actuator. In this way the roller is moved from a first position stowed on the vehicle to a second deployed position in which the roller is spaced apart from the frame so that the anti-scratch material can be deployed over the vehicle.

Rotation of the roller is driven from the motor by a motor driven train which may be a belt or toothed belt. Preferably the motor is a stepper motor connected to timing pulleys and belts that enable drive wheels to rotate and feed the material from, or on to, the roller.

It is appreciated that a power supply for the motor and actuators may be provided by the vehicle. For example, a power source may be provided by the vehicle's battery.

In some embodiments an independent power supply may be provided for the scratch protection device. For example the scratch protection device may include a rechargeable battery.

Preferably the scratch protection device has a roll tensioning system to retain the at least one length of anti-scratch material taut against the at least one roller. In this way the material is kept close to the roller so that the roller and material wrapped around the roller take up minimal space within the bumper space of the vehicle. Additionally this may assist in keeping the material flat and smooth against the roller so that when deployed it feeds evenly, hangs, and fully covers, the part or parts of the vehicle to be protected.

In a preferred embodiment the scratch protection device includes an automated deployment mechanism so that it may be possible that the scratch protection device is automatically deployed by a user within the vehicle or by a user remotely from the vehicle. For example, the automated deployment mechanism may be activated from within the vehicle by pressing a button, or remotely by means of a fob that transmits a signal to a receiver associated with the scratch protection device to activate deployment of scratch protection device, so that the bumper, or part of the bumper is displaced from the vehicle and the material of the scratch protection device is deployed. It is appreciated that retraction of the material may also be automated. The scratch protection device preferably has a controller that includes a receiver for receiving signals to activate and deactivate the device.

For example when the automated deployment mechanism is activated the front and rear bumpers may move out away from the vehicle by means of the horizontal linear actuator(s) to enable the protective anti-scratch material to be deployed.

Once the anti-scratch material has been deployed the bumper, or part of the bumper, can be replaced to the original position on the vehicle. When the protection provided by the anti-scratch material over the bumper is no longer required, the bumper, or part of the bumper, is displaced to enable the material to be retracted back on to the roller so that the scratch protection device is again stowed in the bumper area.

It is appreciated that the anti-scratch material may be adapted to the shape, dimensions and location of parts on the vehicle to enable the material to remain deployed over the vehicle whilst the bumper is retracted and returned to the first position. For example the material may include apertures that correspond with locations of sensors on the vehicle.

In some embodiments the scratch protection device may include at least one proximity sensor to detect presence of objects that may transmit a signal to a controller to prevent or restrict movement of the bumper if an object within a preset proximity is detected. In this way damage to the scratch protection device, the vehicle and other nearby objects is prevented.

In some embodiments the scratch resistant material may include one or more magnet to assist with locating the anti-scratch material against the vehicle body when deployed. For example the magnets may engage with the metal or metal alloy of the vehicle body. Or in an alternative embodiment the bumper may include, or be adapted to receive, corresponding electro-magnets on the lower edges of the bumpers that permit release of the magnets when an electric current is received by the electromagnet, so that the anti-scratch material is released from its magnetic connection with the vehicle and can be rolled away. In this way the anti-scratch material can be secured against the bumper in use.

In another embodiment a distal end of the roll of material may be weighted to encourage the material to hand down over the vehicle when deployed.

In some embodiments a distal end of the material may have an end strip that is shaped to correspond to the profile of the vehicle so that when deployed the distal end of the material covers the desired parts of the vehicle. It is appreciated that this distal end strip does not wrap around the roller, but that the material is rolled up to this part. The end strip is less flexible that the material and may for example be a length of synthetic plastics, or may be formed from a malleable material such as metal wire coated in a synthetic plastic material.

Typically deployment of a preferred embodiment of the scratch protection device includes at least the steps of: activating the horizontal linear actuator(s) to displace a bumper from a first position to a second position away from the vehicle body, activating the vertical linear actuator(s) to move the roller substantially upwards from a first position to a second position in which the roller is above the bumper, activating the drive train so that the anti-scratch material unrolls over the bumper, lowering of the roller by the vertical linear actuator(s) to the first position, returning the bumper to the first position against the vehicle body by means of the horizonal linear actuators.

In a preferred embodiment the steps of operation of the scratch protection device may be:
STEP 1: The user presses a button on their steering wheel that activates the deployment of the scratch protection device.
STEP 2: An alert is generated to notify the user and optionally any nearby third parties, such as passing pedestrians, that the device is being deployed. For example, an audible alert may sound.
STEP 3: The horizontal linear actuator(s) connected to each bumper are activated to displace each bumper away from the vehicle body.
STEP 4: Once the bumpers have moved far enough away from the vehicle body to clear space for deployment of the roller, the vertical linear actuators are activated to move the roller substantially upwards so that the roller is above the bumpers.
STEP 5: When the roller has reached the necessary height, the drive train is activated so that the scratch resistant fabric begins to unroll. The drive train is powered by a stepper motor that drives rotation of the roller to unroll the scratch resistant material over the bumpers. The material is fed out through a pair of brush strips that guide the anti-scratch material over the top of the bumpers without it snagging on corners. At all times the roll tensioning system keeps the material tight against the roll whilst being deployed and retracted to limit or prevent it wrinkling.
STEP 6: When the anti-scratch material has been deployed to cover the bumpers, the roller can be lowered by the vertical linear actuator which pulls the anti-scratch material taut, and the bumpers can be returned to their first position against the vehicle body by means of the horizonal linear actuators.

To retract the anti-scratch material the above mentioned steps occur in reverse.

In preferred embodiments the vehicle protection device includes at least one brush strip that is shaped and dimensioned to correspond to a vehicle bumper. The brush strip provides a protective layer over which the anti-scratch material is deployed.

In some embodiments the vehicle protection device has a pair of brush strips through which the anti-scratch material passes.

Advantageously the brush strip allows the sheet of anti-scratch material to roll out over the top of the bumpers without it snagging on any corners or shaping of the bumper.

In a preferred embodiment rollers may be arranged to correspond to the shape of brush strip. For example multiple rollers may be provided that are arranged to feed and retract separate reels of anti-scratch material so as to permit deployment around a bumper that is typically curved. The rollers may all be driven simultaneously by the motor so that deployment and retraction occur simultaneously.

Alternatively a very flexible and optionally elastic material may be deployed as a single sheet from a single roller. In this way the flexible material may be arranged on a curved roller and/or may cover an area of the vehicle that is wider than the roller once the material is deployed. It is appreciated that in this embodiment the material may be tensioned but will not be flat on the roller and may have bunched regions to accommodate the material and/or the shape of the roller. In such embodiments one or more brush strip may assist with spreading and smoothing the material as it is deployed and retracted.

In some embodiments the material may be guided by guide means comprising side edges of the material that are guided through channel so that the material is spread and tensioned width wise during deployment and retraction. For example the side edges of the material may include a flexible T-bar that travels through a T-shaped channel on an end of the brush strip.

In some embodiments a vehicle bumper may incorporate the scratch protection device. For example the vehicle may be manufactured to include the scratch protection device.

Alternatively the scratch protection device may be retrofitted to a vehicle so as to be provided in the bumper area.

Preferred embodiments of the invention will now be described, by way of example and with reference to the Figures in which:

### Brief Description of Figures

Figure 1 shows a preferred embodiment of a scratch protection device:
Figure 2 shows the first embodiment of the scratch protection device with a close up image of the drive train and tensioning means; and
Figures 3A, 3B and 3C show the stages of deployment of the scratch protection device.

### Detailed Description of Figures

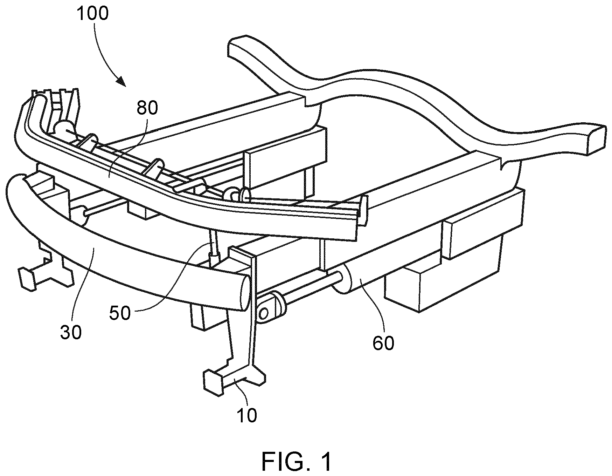

Figures 1 to 3 show a preferred embodiment of the scratch protection device 100.

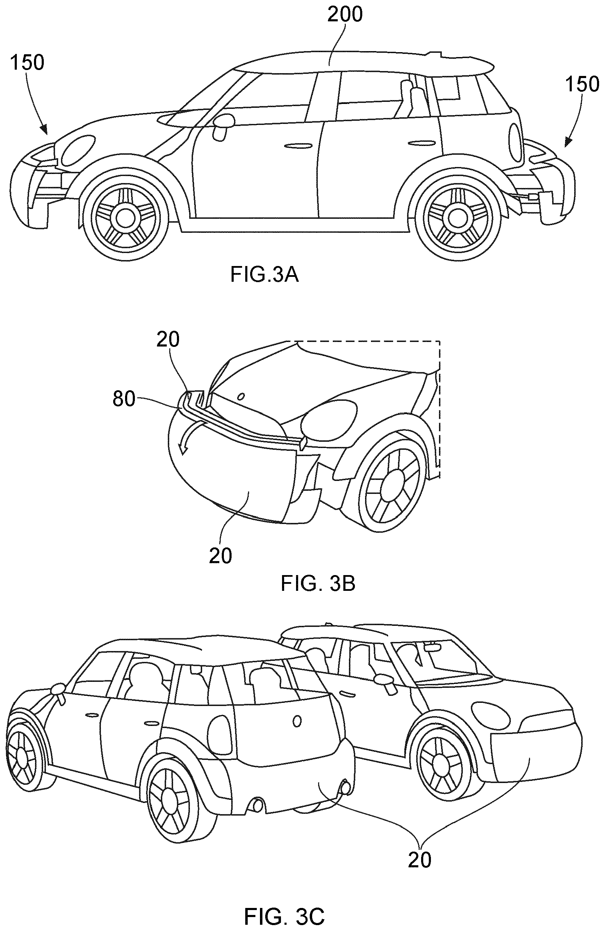

The scratch protection device 100 is for a vehicle 200 and is preferably provided at the bumper regions 150 of a vehicle (Figures 3A and 3B which show the bumper regions).

The scratch protection device 100 has a vehicle attachment means 10 that enables the device to be connected to a vehicle 200.

The device 100 has least one roller 15 for deploying and retracting at least one length of anti-scratch material 20. The at least one roller 15 is arranged on a frame 30.

A motor driven train (belt) 40 drives rotation of the roller 15 by rotation of drive wheels 41.

The scratch protection device 100 has at least one vertical linear actuator 50 for moving the at least one roller 15, up and down, with respect to the frame 30. This enables the roller 15 to be deployed from a stowed location in the bumper area 150 (for example bonnet space or boot space) to an area external to the bumper space 150 from which the anti-scratch material 20 can be deployed so that is lays over the bumper(s) 150.

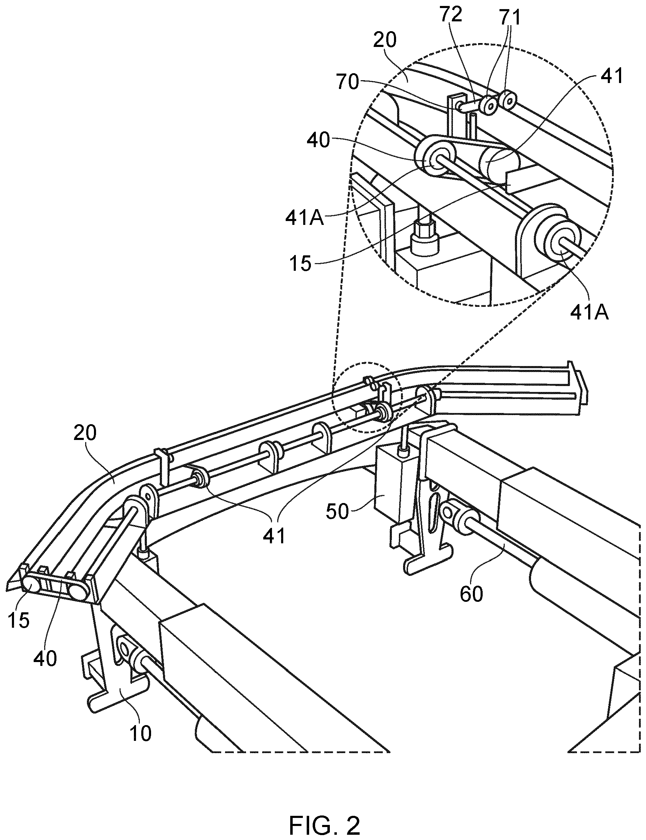

The scratch protection device 100 also has at least one horizontal linear actuator 60 for extending and retracting part of the frame 30 that is connected to the bumper (not shown in Figures 1 and 2). This enables the bumper to be moved forward and backwards with respect to the vehicle.

In this way the roller 15 is positioned so that material 20 is deployed over an external face of the bumper.

The actuators 50, 60 may be powered by a motor, or each powered by their own motor (not shown). Preferably a stepper motor is provided.

In some embodiments the actuators may be driven by means of a hydraulic or pneumatic system (not shown).

The motor (not shown) is operatively connected to drive wheels 41, 41A that rotate the roller 15 by means of a timing belt 40 when activated (see Figure 2). The drive wheels 41A are provided at ends and mid points of the roller 15. The drive wheels 41 are driven by the motor and connected by a timing belt to drive wheels 41 A on the roller.

The scratch protection device 100 has a roll tensioning system 70 to retain the at least one length of anti-scratch material 20 taut against the at least one roller 15.

The tensioning system 70 has wheels 71 mounted in an arm 72 (see Figure 2). The wheels 70 are arranged in contact with the material 20 to ensure that the material remains taut against the roller when deployed and when retracted.

The scratch protection device 100 has a pair of brush strips 80 that is shaped and dimensioned to correspond to a vehicle bumper. Feeding the anti-scratch material through the pair of brush strips helps prevent snagging and ensures the material is correctly deployed to cover the bumpers.

The invention has been described by way of examples only and it will be appreciated that variation may be made to the above-mentioned embodiments without departing from the scope of invention as defined by the claims.

## Claims

1. A scratch protection device 100 for a vehicle (200) that is deployed from a stowed location in a bumper region (150) comprising: a vehicle attachment means (10), at least one roller (12) for deploying and retracting at least one length of anti-scratch material (20), the at least one roller (15) is arranged on a frame (30) and a motor drives rotation of the roller (15), **characterised in that** there is at least one substantially vertical linear actuator (50) is provided for moving the at least one roller (15) with respect to the frame (30) and at least one substantially horizontal linear actuator (60) is provided for extending and retracting part of the frame (30) that is connected to a bumper (150).

2. A scratch protection device (100) according to any preceding claim including a roll tensioning system (70) to retain the at least one length of anti-scratch material (20) taut against the at least one roller (15).

3. A scratch protection device (100) according to any preceding claim including an automated deployment mechanism.

4. A scratch protection device (100) according to any preceding claim including at least one brush strip (80) that is shaped and dimensioned to correspond to a vehicle bumper profile.

5. A scratch protection device (100) according to any preceding claim wherein the anti-scratch material (20) is transparent or translucent.

6. A scratch protection device (100) according to any preceding claim wherein the anti-scratch material is decorated.

7. A scratch protection device (100) according to any preceding claim including at least one proximity sensor to detect nearby objects which causes the device to deploy.

8. A scratch protection device (100) according to any preceding claim wherein the anti-scratch material (20) includes an end strip provided at a distal end.

9. A scratch protection device (100) according to any preceding claim including a guide means wherein the anti-scratch material (20) includes a side edge that is guided through a channel to assist with deployment and retraction of the anti-scratch material (20).

10. A scratch protection device (100) according to claim 11 wherein the side edge is a flexible T-shaped cross section that is fed through a T-shaped channel.

11. A vehicle bumper (150) including the scratch protection device (100) according to any preceding claim.

12. A vehicle (200) including the scratch protection device (100) as described in any of claims 1 to 10.

13. A method of deploying the scratch protection device (100) described in claims 1 to 12 including the steps of: activating the horizontal linear actuator(s) (60) that is provided for extending and retracting part of the frame (30) that is connected to a bumper to displace the bumper (150) from a first position to a second position away from the vehicle body, activating the vertical linear actuator(s) (50) to move the roller substantially upwards from a first position to a second position in which the roller (15) is above the bumper (150), activating the motor driven train so that the anti-scratch material (20) unrolls over the bumper (150), lowering the roller (15) by the vertical linear actuator(s) (50) to the first position, returning the bumper (150) to the first position against the vehicle body by means of the horizonal linear actuators (60).

## Patentansprüche

1. Kratzschutzvorrichtung 100 für ein Fahrzeug (200), die aus einer verstauten Stelle in einer Stoßstangenregion (150) ausgezogen wird, umfassend: ein Fahrzeuganbringungsmittel (10), mindestens eine Rolle (12) zum Ausziehen und Einziehen mindestens einer Länge eines Antikratzmaterials (20), wobei die mindestens eine Rolle (15) an einem Rahmen (30) eingerichtet ist und ein Motor eine Drehung der Rolle (15) antreibt, **dadurch gekennzeichnet, dass** mindestens ein im Wesentlichen vertikaler Linearaktor (50) zum Bewegen der mindestens einen Rolle (15) in Bezug auf den Rahmen (30) vorgesehen ist und mindestens ein im Wesentlichen horizontaler Linearaktor (60) zu Ausfahren und Einfahren eines Teils des Rahmens (30), der mit einer Stoßstange (150) verbunden ist, vorgesehen ist.

2. Kratzschutzvorrichtung (100) nach einem vorhergehenden Anspruch, beinhaltend ein Rollenanspannungssystem (70), um die mindestens eine Länge des Antikratzmaterials (20) gespannt gegen die mindestens eine Rolle (15) zu halten.

3. Kratzschutzvorrichtung (100) nach einem vorhergehenden Anspruch, beinhaltend einen automatischen Ausziehmechanismus.

4. Kratzschutzvorrichtung (100) nach einem vorhergehenden Anspruch, beinhaltend mindestens eine Bürstenleiste (80), die geformt und bemessen ist, um einem Fahrzeugstoßstangenprofil zu entsprechen.

5. Kratzschutzvorrichtung (100) nach einem vorhergehenden Anspruch, wobei das Antikratzmaterial (20) transparent oder transluzent ist.

6. Kratzschutzvorrichtung (100) nach einem vorhergehenden Anspruch, wobei das Antikratzmaterial dekoriert ist.

7. Kratzschutzvorrichtung (100) nach einem vorhergehenden Anspruch, beinhaltend mindestens einen Näherungssensor, um Objekte in der Nähe zu erfassen, was bewirkt, dass die Vorrichtung ausgelöst wird.

8. Kratzschutzvorrichtung (100) nach einem vorhergehenden Anspruch, wobei das Antikratzmaterial (20) einen Endstreifen beinhaltet, der an einem distalen Ende vorgesehen ist.

9. Kratzschutzvorrichtung (100) nach einem vorhergehenden Anspruch, beinhaltend ein Führungsmittel, wobei das Antikratzmaterial (20) einen Seitenrand beinhaltet, der durch einen Kanal geführt wird, um das Ausziehen und das Einziehen des Antikratzmaterials (20) zu unterstützen.

10. Kratzschutzvorrichtung (100) nach Anspruch 11, wobei der Seitenrand ein flexibler, T-förmiger Querschnitt ist, der durch einen T-förmigen Kanal zugeführt wird.

11. Fahrzeugstoßstange (150), beinhaltend die Kratzschutzvorrichtung (100) nach einem vorhergehenden Anspruch.

12. Fahrzeug (200), beinhaltend die wie in einem der Ansprüche 1 bis 10 beschriebene Kratzschutzvorrichtung (100).

13. Verfahren zum Auslösen der in den Ansprüchen 1 bis 12 beschriebenen Kratzschutzvorrichtung (100), beinhaltend die Schritte: Aktivieren des bzw. der horizontalen Linearaktoren (60), die zum Ausfahren und Einfahren eines Teils des Rahmens (30) vorgesehen sind, der mit einer Stoßstange verbunden ist, um die Stoßstange (150) aus einer ersten Position in eine zweite Position von der Fahrzeugkarosserie weg zu verschieben, Aktivieren des bzw. der vertikalen Linearaktoren (50), um die Rolle im Wesentlichen nach oben aus einer ersten Position in eine zweite Position zu bewegen, in der die Rolle (15) über der Stoßstange (150) ist, Aktivieren des motorbetriebenen Räderwerks, so dass das Antikratzmaterial (20) sich über die Stoßstange (150) abrollt, Senken der Rolle (15) durch den bzw. die vertikalen Linearaktoren (50) in die erste Position, Zurückfahren der Stoßstange (150) in die erste Position gegen die Fahrzeugkarosserie mithilfe der horizontalen Linearaktoren (60).

## Revendications

1. Un dispositif de protection contre les rayures (100) pour un véhicule (200), lequel est déployé depuis un emplacement de rangement dans une zone pare-choc (150) comprenant : un moyen de fixation de véhicule (10), un ou plusieurs rouleaux (12) pour le déploiement et la rétraction d'une ou plusieurs longueurs de matériau anti-rayures (20), le ou les rouleaux (15) sont agencés sur un cadre (30) et un moteur entraîne la rotation du rouleau (15), **caractérisé en ce qu'**un ou plusieurs actionneurs linéaires sensiblement verticaux (50) sont fournis pour déplacer le ou les rouleaux (15) par rapport au cadre (30) et un ou plusieurs actionneurs linéaires sensiblement horizontaux (60) sont fournis pour étendre et rétracter une partie du cadre (30) qui est reliée à un pare-choc (150).

2. Un dispositif de protection contre les rayures (100) selon l'une quelconque des revendications précédentes, incluant un système de tension de rouleau (70) pour retenir la ou les longueurs de matériau anti-rayures (20) tendues contre le ou les rouleaux (15).

3. Un dispositif de protection contre les rayures (100) selon l'une quelconque des revendications précédentes, incluant un mécanisme de déploiement automatisé.

4. Un dispositif de protection contre les rayures (100) selon l'une quelconque des revendications précédentes, incluant une ou plusieurs bandes de brosse (80) qui sont d'une forme et d'une dimension qui correspondent à un profil de pare-choc de véhicule.

5. Un dispositif de protection contre les rayures (100) selon l'une quelconque des revendications précédentes, dans lequel le matériau anti-rayures (20) est transparent ou translucide.

6. Un dispositif de protection contre les rayures (100) selon l'une quelconque des revendications précédentes, dans lequel le matériau anti-rayures est décoré.

7. Un dispositif de protection contre les rayures (100) selon l'une quelconque des revendications précédentes, incluant une ou plusieurs capteurs de proximité pour détecter des objets proches qui amènent le dispositif à se déployer.

8. Un dispositif de protection contre les rayures (100) selon l'une quelconque des revendications précédentes, dans lequel le matériau anti-rayures (20) inclut une bande d'extrémité fournie à une extrémité distale.

9. Un dispositif de protection contre les rayures (100) selon l'une quelconque des revendications précédentes, incluant un moyen de guidage dans lequel le matériau anti-rayures (20) inclut un bord latéral qui est guidé dans un canal pour contribuer au déploiement et à la rétraction du matériau anti-rayures (20).

10. Un dispositif de protection contre les rayures (100) selon la revendication 11, dans lequel le bord latéral a une section transversale souple en forme de T qui est amenée par un canal en forme de T.

11. Un pare-choc de véhicule (150) incluant le dispositif de protection contre les rayures (100) selon l'une quelconque des revendications précédentes.

12. Un véhicule (200) incluant le dispositif de protection contre les rayures (100) comme décrit dans l'une quelconque des revendications 1 à 10.

13. Un procédé de déploiement du dispositif de protection contre les rayures (100) décrit dans les revendications 1 à 12, incluant les étapes consistant à : activer le ou les actionneurs linéaires horizontaux (60) qui sont fournis pour étendre et rétracter une partie du cadre (30) qui est reliée à un pare-choc pour déplacer le pare-choc (150) d'une première position à une deuxième position s'écartant de la carrosserie de véhicule, activer le ou les actionneurs linéaires verticaux (50) pour déplacer le rouleau sensiblement vers le haut d'une première position à une deuxième position dans laquelle le rouleau (15) est au-dessus du pare-choc (150), activer l'entraînement à moteur de sorte que le matériau anti-rayures (20) se déroule sur le pare-choc (150), abaisser le rouleau (15) par le ou les actionneurs linéaires verticaux (50) à la première position, remettre le pare-choc (150) à la première position contre la carrosserie de véhicule au moyen des actionneurs linéaires horizontaux (60).
